(19) Europäisches Patentamt
European Patent Office
Office européen des brevets

(11) **EP 4 488 713 A1**

(12) **EUROPEAN PATENT APPLICATION**

(43) Date of publication:
**08.01.2025 Bulletin 2025/02**

(21) Application number: **24182036.4**

(22) Date of filing: **13.06.2024**

(51) International Patent Classification (IPC):
**G01S 7/481** (2006.01)    **G01S 7/484** (2006.01)
**G01S 7/486** (2020.01)    **G01S 17/10** (2020.01)
**G01S 17/42** (2006.01)    **G01S 17/931** (2020.01)
G01S 7/4911 (2020.01)    G01S 7/4912 (2020.01)
G01S 17/32 (2020.01)

(52) Cooperative Patent Classification (CPC):
**G01S 17/931; G01S 7/4815; G01S 7/4817;
G01S 7/484; G01S 7/486; G01S 17/10;
G01S 17/42;** G01S 7/4911; G01S 7/4912;
G01S 17/32

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.07.2023   CN 202310839455**

(71) Applicant: **Suteng Innovation Technology Co., Ltd
Shenzhen City Guangdong 518000 (CN)**

(72) Inventor: **CHEN, Huazhou
Shenzhen (CN)**

(74) Representative: **Ran, Handong et al
Maucher Jenkins
Seventh Floor Offices
Artillery House
11-19 Artillery Row
London SW1P 1RT (GB)**

(54) **LIDAR CONTROL METHOD, LIDAR CONTROL DEVICE, TERMINAL DEVICE, AND COMPUTER-READABLE STORAGE MEDIUM**

(57)    This application pertains to the field of LiDAR technology and provides a LiDAR control method, LiDAR control device, terminal device, and computer-readable storage medium. The method includes the following steps: determining a target receiving channel; adjusting an emitting channel grouping according to the target receiving channel; wherein the emitting channel corresponding to the target receiving channel and the emitting channel corresponding to the non-target receiving channel are in different emitting channel groupings; controlling the emitting channels to re-emit the detection signals according to the adjusted emitting channel grouping. Because the emitting channels corresponding to the target receiving channel and the emitting channels corresponding to the non-target receiving channel emit detection laser beams separately, this effectively reduces the crosstalk of high-energy reflected echoes from high-reflective objects on the reflected echoes from non-high-reflective objects, thereby improving the detection accuracy of the LiDAR.

Figure 1

Diagram boxes:
- Determine a target receiving channel based on the echo signal received by each receiving channel — S11
- Adjust the emitting channel grouping according to the target receiving channel — S12
- Control the emitting channels to re-emit detection signals according to the adjusted emitting channel grouping — S13

EP 4 488 713 A1

## Description

TECHNICAL FIELD

This application belongs to the field of LiDAR technology, and particularly relates to a LiDAR control method, LiDAR control device, terminal device, and computer-readable storage medium.

BACKGROUND

LiDAR, due to its advantages such as high resolution, high sensitivity, strong anti-interference capability, and no influence by dark conditions, is often used in fields such as autonomous driving, logistics vehicles, robots, and public intelligent transportation.

A commercial vehicle-mounted LiDAR system, as the resolution increases, will use multiple channels to emit and receive light beams in parallel for detection in the same time period. When there are highly reflective objects in the case of multiple channels emitting and receiving in parallel in the same time period, there will be a problem of serious crosstalk between the echo signal reflected by the highly reflective object and the echo signal reflected by the non-highly reflective object, reducing the detection accuracy of the LiDAR.

SUMMARY

Embodiments of the present application provide a LiDAR control method, LiDAR control device, terminal device, and computer-readable storage medium, which can reduce crosstalk between parallel channels and improve the detection accuracy of the LiDAR.

In a first aspect, an embodiment of the present application provides a LiDAR control method, comprising: determining a target receiving channel based on an echo signal received by each receiving channel, wherein the target receiving channel is a receiving channel that receives an echo signal reflected from a high-reflective object; adjusting an emitting channel grouping according to the target receiving channel, wherein an emitting channel corresponding to the target receiving channel and an emitting channel corresponding to a non-target receiving channel are in different emitting channel groupings; and controlling an emitting channel to re-emit a detection signal according to the adjusted emitting channel grouping.

In an embodiment, controlling an emitting channel to re-emit a detection signal according to the adjusted emitting channel grouping comprises: determining an emitting strategy for the adjusted emitting channel grouping according to a target strategy; and controlling the adjusted emitting channel grouping to re-emit detection signals according to the emitting strategy.

In an embodiment, the target strategy comprises at least one of an emitting power adjustment strategy, emitting mode adjustment strategy, a coding mode adjustment strategy, and an emitting time adjustment strategy.

In an embodiment, the target strategy is the emitting time adjustment strategy, determining an emitting strategy for the adjusted emitting channel grouping according to the target strategy comprises: adjusting the emitting time of an emitting channel grouping where the emitting channel corresponding to the target receiving channel is located and/or adjusting the emitting time of an emitting channel grouping where the emitting channel corresponding to the non-target receiving channel is located, wherein there is a time interval between the adjusted emitting time of the emitting channel corresponding to the target receiving channel and the adjusted emitting time of the emitting channel corresponding to the non-target receiving channel.

In an embodiment, adjusting the emitting time of the emitting channel corresponding to the target receiving channel and/or adjusting the emitting time of the emitting channel corresponding to the non-target receiving channel comprises: determining the emitting time of the emitting channel corresponding to the target receiving channel according to a first coding set and/or determining the emitting time of the emitting channel corresponding to the non-target receiving channel according to the first coding set.

In an embodiment, after controlling an emitting channel to re-emit a detection signal according to the adjusted emitting channel grouping, the method comprises: determining whether a target receiving channel exists based on an echo signal received by each receiving channel.

In an embodiment, the LiDAR comprises a plurality of emitting channel groups, and adjusting the emitting channel grouping according to the target receiving channel comprises: selecting a target emitting channel in each emitting channel group, wherein the target emitting channel is an emitting channel corresponding to the target receiving channel; and arranging the target emitting channel in each emitting channel group into one emitting channel grouping.

In an embodiment, the LiDAR comprises a plurality of emitting channel groups, and adjusting the emitting channel grouping according to the target receiving channel comprises: determining a target emitting channel group according to a target detection field of view; selecting a target emitting channel in the target emitting channel group, wherein the target emitting channel is an emitting channel corresponding to the target receiving channel; and arranging the target emitting channel in one emitting channel grouping.

In an embodiment, the target strategy comprises a receiving threshold adjustment strategy, and after adjusting the emitting channel grouping according to the target receiving channel, the method further comprises: adjusting a receiving threshold of the receiving channel according to the receiving threshold adjustment strategy.

In a second aspect, the embodiment of the present application provides a LiDAR control device, comprising: a determining module, configured to determine a target receiving channel based on an echo signal received by each receiving channel, wherein the target receiving channel is a receiving channel that receives an echo signal reflected from a high-reflective object; a grouping adjusting module, configured to adjust an emitting channel grouping according to the target receiving channel, wherein an emitting channel corresponding to the target receiving channel and an emitting channel corresponding to a non-target receiving channel are in different emitting channel groupings; and a controlling module, configured to control an emitting channel to re-emit a detection signal according to the adjusted emitting channel grouping.

In a third aspect, the embodiment of the present application provides a terminal device, comprising a processor, a storage, and computer programs stored in the storage and capable of running on the processor, wherein the processor implements the LiDAR control method according to any one of the implementations of the first aspect when executing the computer programs.

In a fourth aspect, the embodiment of the present application provides a computer-readable storage medium having stored thereon computer programs which, when executed by a processor, cause the processor to implement the LiDAR control method according to any one of the implementations of the first aspect when executing the computer programs.

In a fifth aspect, the embodiment of the present application provides a computer program product which, when run on a terminal device, enables the terminal device to execute the LiDAR control method according to any one of the implementations of the first aspect.

The LiDAR control method provided by the embodiment of the present application determines the target receiving channel corresponding to a high-reflective object based on the echo information of the reflected echoes received by each receiving channel, adjusts the emitting channel grouping of emitting channels of the LiDAR. The emitting channel corresponding to the target receiving channel and the emitting channel corresponding to the non-target receiving channel are in different emitting channel groupings, and controls the LiDAR to emit detection signals according to the adjusted emitting channel grouping. Since the emitting channel corresponding to the target receiving channel and the emitting channel corresponding to the non-target receiving channel emit detection signals separately, effectively reduce the crosstalk of high-energy echoes reflected from high-reflective objects on the echoes reflected from non-high-reflective objects, thereby improving the resolution of the LiDAR.

BRIEF DESCRIPTION OF DRAWINGS

To clearly illustrate the technical solutions in the embodiments of this application, the following provides a brief introduction to the accompanying drawings required for the description of the embodiments.

Figure 1 is a schematic flowchart of the implementation of a LiDAR control method provided by an embodiment;
Figure 2 is a schematic diagram of the emitting channel grouping of a LiDAR provided by an embodiment;
Figure 3 is a schematic diagram of the emitting channel grouping of a LiDAR provided by an embodiment;
Figure 4 is a schematic diagram of the emitting channel grouping of a LiDAR provided by an embodiment;
Figure 5 is a schematic flowchart of the implementation of S13 in the LiDAR control method provided by an embodiment;
Figure 6 is a schematic diagram of the emission timing of different emitting channel groupings of a LiDAR provided by an embodiment;
Figure 7 is a schematic flowchart of the implementation of a LiDAR control method provided by another embodiment;
Figure 8 is a schematic structural diagram of a LiDAR control device provided by an embodiment;
Figure 9 is a schematic structural diagram of a terminal device provided by an embodiment.

DETAILED DESCRIPTION

The term "and/or" used in the specification and the claims indicate any and all possible combinations of one or more of the associated listed items. The terms "first," "second," "third," etc., are used in the description of the specification and the claims to distinguish different descriptions and not to indicate or imply relative importance.

References to "an embodiment" or "some embodiments" in the specification mean that specific features, structures, or characteristics described in connection with the embodiment(s) are included in at least one embodiment of the present application. Thus, the phrases "in one embodiment," "in some embodiments," "in other embodiments," "in another embodiment," etc., as found in various places throughout the specification, are not necessarily all referring to the same embodiment. Instead, these phrases mean "one or more but not all embodiments," unless explicitly stated otherwise. Terms such as "including," "comprising," "having," and their derivatives mean "including but not limited to," unless explicitly stated otherwise.

Vehicle-mounted LiDARs can obtain three-dimensional images of the physical space to detect the driving environment. Autonomous driving requires LiDARs to distinguish small distant objects with high precision. To improve the accuracy of identifying small distant objects, LiDARs with multiple parallel emitting and receiving channels are usually used. A LiDAR typically includes multiple laser emitters and receivers arranged densely. Each laser emitter corresponds to an emitting channel, and each laser receiver corresponds to a receiving channel, forming a complete transceiver channel through the corresponding emitting and receiving channels. One emitting channel can correspond to one or multiple receiving channels. The increase in point frequency and measurement distance can cause crosstalk between channels in the LiDAR.

In an embodiment, an effective measurement distance of the LiDAR is L, the total scan time is $T_{tot}$, and the total point frequency is $N_{tot}$; the average time per point is: $T_{ave}=T_{tot}/N_{tot}$. The flight time of the light pulse is: $\tau = 2L/c$, c is the speed of light. When $\tau<T_{ave}$, one receiving channel is working within each analysis period, effectively avoiding inter-channel crosstalk. As the LiDAR's point frequency and measurement distance increase, $T_{ave}$ continues to decrease, potentially leading to situations where $\tau>T_{ave}$. In such cases, multiple receiving channels may work simultaneously within the same time period, resulting in crosstalk between adjacent receiving channels.

Vehicle-mounted LiDARs detect the driving environment. The road scenes mainly include two types of objects: Lambertian bodies and high-reflective objects. A Lambertian body refers to an object that uniformly scatters incident laser, achieving diffuse reflection, such as trees on the road. High-reflective objects refer to objects whose reflected echo is in the same direction as the incident laser with high directionality, such as road signs. The echo intensity of high-reflective objects is more than 200 times that of Lambertian bodies. The high-energy reflected echo from high-reflective objects can cause severe crosstalk with the reflected echo from non-high-reflective objects (e.g., Lambertian bodies), reducing the detection accuracy of the LiDAR.

Embodiments of the present application provide a LiDAR control method. A target receiving channel corresponding to high-reflective objects is determined based on the echo information received by each receiving channel, and the emitting channel grouping of all emitting channels in the LiDAR is adjusted. The emitting channel corresponding to the target receiving channel and the emitting channel corresponding to the non-target receiving channel are in different emitting channel groupings. The LiDAR is controlled to emit detection signals according to the adjusted emitting channel grouping. The emitting channel corresponding to the target receiving channel and the emitting channel corresponding to the non-target receiving channel emit detection laser beams separately, this effectively reduces the crosstalk of high-energy reflected echoes from high-reflective objects on the reflected echoes from non-high-reflective objects, thereby improving the detection accuracy of the LiDAR.

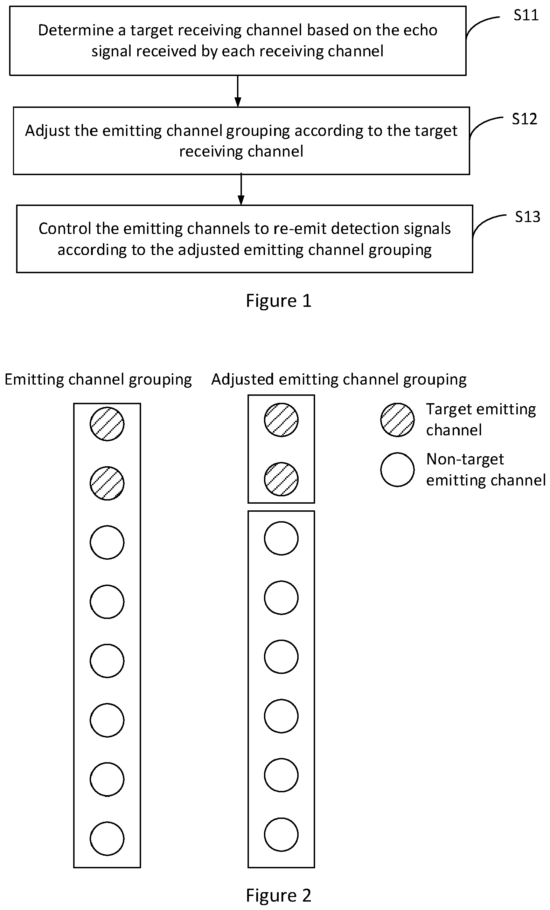

Refer to Figure 1, which is a schematic flowchart of a LiDAR control method provided by the embodiments of the present application. The executing entity of the LiDAR control method provided by the embodiments can be a LiDAR, a control system or module inside the LiDAR, or a terminal device communicatively connected to the LiDAR. The terminal device can be a mobile terminal such as a smartphone, tablet, or wearable device, or a device such as a computer, cloud server, or LiDAR-assisted computer in various application scenarios. The embodiments of the present application are aimed at situations where multiple transceiver channels are working simultaneously.

As shown in Figure 1, the LiDAR control method includes steps S11 to S13.

S11: Determine a target receiving channel according to the echo signal received by each receiving channel.

The target receiving channel refers to the receiving channel that receives the echo signal reflected by a high-reflective object, i.e., the channel where the received echo signal intensity is greater than a preset value. The preset value is related to the receiving efficiency, the receiving threshold settings, and the arrangement density of the receiving device corresponding to the receiving channel.

In an embodiment, after the LiDAR emits the detection signal through each emitting channel, the receiving channels corresponding to the emitting channels will receive the echo signals reflected by the target object. After obtaining the echo signals received by each receiving channel, the LiDAR can determine whether the received echo signal is reflected by a high-reflective object based on the echo signal's information, determining which receiving channel received the echo signal reflected by the high-reflective object based on the echo signal's intensity information. When it is determined based on the echo signal's information that there is a receiving channel that received the echo signal reflected by a high-reflective object, the receiving channel that received the echo signal reflected by the high-reflective object is determined as the target receiving channel.

In some embodiments, the echo information includes echo intensity, echo area value, or reflectivity information.

In an embodiment, after obtaining the echo signals received by each receiving channel, the LiDAR can obtain the echo signal's intensity. If the echo signal's intensity is greater than a preset intensity threshold, the receiving channel corresponding to the echo signal can be determined as the target receiving channel. The preset intensity threshold can be set according to parameters of the device.

In an embodiment, after obtaining the echo signals received by each receiving channel, the LiDAR can obtain the echo signal's area value. If the echo signal's area value is greater than a preset area threshold, the receiving channel corresponding to the echo signal can be determined as the target receiving channel. The preset area threshold can be set according to parameters of the device.

In an embodiment, after obtaining the echo signals received by each receiving channel, the LiDAR can calculate the reflectivity of the echo signal. If the reflectivity of the echo signal is greater than a preset reflectivity threshold, the receiving channel corresponding to the echo signal can be determined as the target receiving channel. The preset reflectivity threshold can be set according to the parameters of the device.

In an embodiment, the LiDAR can use any one of the above items of echo information as the evaluation standard to determine whether the receiving channel is the target receiving channel, or it can use two or more items of the echo information as the evaluation standard to determine whether the receiving channel is the target receiving channel. For example, if the LiDAR uses echo intensity as the evaluation standard, it will calculate the echo intensity of each echo signal corresponding to each receiving channel after receiving the echo signal, then compare the calculated echo intensities with the preset intensity threshold, and determine the receiving channels corresponding to the echo signals with echo intensities greater than the preset intensity threshold as the target receiving channels. Another example is that the LiDAR can use both echo intensity and reflectivity as evaluation standards. After receiving the echo signals corresponding to each receiving channel, it will calculate the echo intensity and reflectivity of each echo signal, then compare the calculated echo intensities with the preset intensity threshold, and compare the calculated reflectivities with the preset reflectivity threshold. The receiving channels corresponding to the echo signals with echo intensities greater than the preset intensity threshold or reflectivities greater than the preset reflectivity threshold are determined as the target receiving channels.

In an embodiment, a LiDAR emission group includes eight emitting channels, wherein transmission and receiving are in parallel and one emitting channel corresponds to one receiving channel. After the LiDAR controls the emitting channels of these eight transceivers to emit detection signals, the first receiving channel receives the first echo signal, the second receiving channel receives the second echo signal, the third receiving channel receives the third echo signal, the fourth receiving channel receives the fourth echo signal, the fifth receiving channel receives the fifth echo signal, the sixth receiving channel receives the sixth echo signal, the seventh receiving channel receives the seventh echo signal, and the eighth receiving channel receives the eighth echo signal. The LiDAR analyzes the first to eighth echo signals. In an embodiment, the echo intensity of the third and fourth echo signals is greater than the preset intensity threshold, then the third and fourth receiving channels are determined as the target receiving channels.

S12: Adjust the emitting channel grouping according to the target receiving channel.

In an embodiment, adjusting the emitting channel grouping according to the target receiving channel comprises placing the emitting channel corresponding to the target receiving channel, which corresponds to the high-reflective object, in a separate emitting channel grouping, thereby separating the emitting channel corresponding to the target receiving channel from the emitting channel corresponding to the non-target receiving channel.

In an embodiment, refer to Figure 2, the LiDAR includes eight emitting channels. The first and second emitting channels correspond to the target receiving channels. When adjusting the emitting channel grouping, the first and second emitting channels can be grouped into one emitting channel group, while the third to eighth emitting channels are grouped into another emitting channel group.

In an embodiment, when a LiDAR includes multiple emitting groups, each with multiple emitting channels. Each emitting channel group can have multiple emitting channels that emit laser beams in parallel. Multiple emitting groups can emit in parallel or in series. Parallel emission means that simultaneously emitting laser beams within a preset time. Serial emission means that multiple emitting groups emit laser beams sequentially. In an embodiment, after the first emitting group completes all emissions, the second emitting group starts emitting. After a round of transceiving work, the LiDAR can determine a target receiving channel corresponding to each emitting grouping based on S11. The existing emitting channel grouping is adjusted based on the emitting channel corresponding to the target receiving channel. Placing the emitting channels in each emitting channel group corresponding to the target receiving channels in one emitting channel group, placing all emitting channels in all emitting channel groups corresponding to target receiving channels in one emitting channel group, or placing emitting channels in all emitting channel groups corresponding to target receiving channels in at least two emitting channel groups to complete the adjustment of the emitting channel grouping. The quantity of groups for the emitting channels corresponding to the target receiving channels is related to the energy of the received echo by the target receiving channels and the distance between the receiving channels.

Emitting channels corresponding to the non-target receiving channels can emit laser beams according to the original emitting grouping. The grouping of emitting channels corresponding to non-target receiving channels can be adjusted based on the position of the target receiving channels and the intensity of the echo signals received by the target receiving channels. In an embodiment, the adjustment can be based on the distance between the non-target receiving channels and the target receiving channels, the physical spacing between the receiving channels, or other information. In an embodiment, if the target receiving channels are distributed in an arranged manner, the emitting channels separated by the target receiving channels can be set to different emitting groups.

Each emitting channel can correspond to one or multiple receiving channels. The LiDAR can determine the emitting channels corresponding to the target receiving channels based on the correspondence between the emitting and receiving channels.

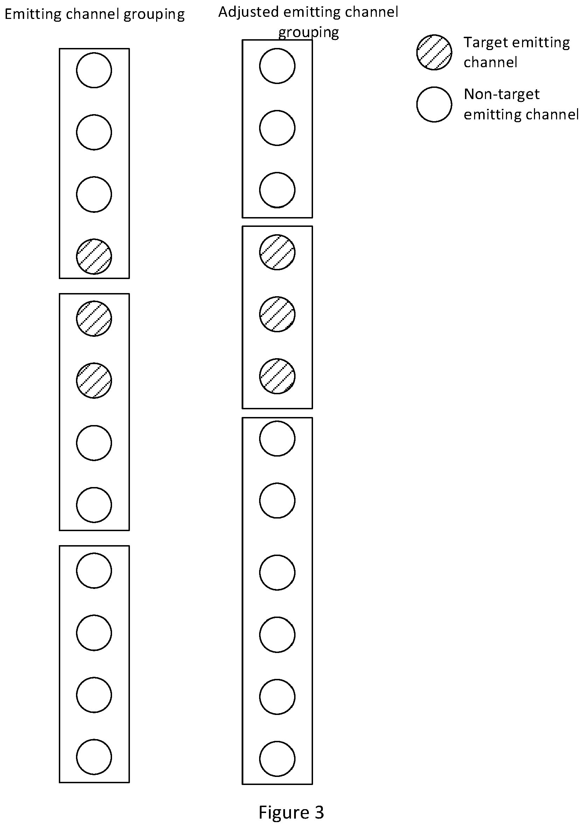

In an embodiment, refer to Figure 3, an emitting group in the LiDAR includes 12 transceiver channels (parallel transceiving, with each transceiver channel including one emitting channel and one corresponding receiving channel). When the LiDAR starts working, the 12 emitting channels of the emitting group are divided into three emitting channel groups, with four emitting channels in each group. After the LiDAR controls these three emitting groups to emit detection signals, it can receive the echo signals from the 12 receiving channels and determine the target receiving channels based on S11. Suppose the target receiving channels determined based on S11 include the fourth, fifth, and sixth receiving channels. The LiDAR will set the first, second, and third emitting channels (corresponding to the first, second, and third receiving channels) as one emitting channel group (with emitting channels corresponding to non-high-reflective objects). The fourth, fifth, and sixth emitting channels (corresponding to the fourth, fifth, and sixth receiving channels) are set as another emitting channel group (with emitting channels corresponding to high-reflective objects). The seventh to twelfth emitting channels (corresponding to the seventh to twelfth receiving channels) are set as another emitting channel group, completing the adjustment of the emitting channel grouping.

In some embodiments, when the LiDAR has multiple parallel emitting channel groups, the LiDAR can control each emitting channel group to emit detection signals according to a preset emission strategy. It then filters out the target emitting channels in each emitting channel group and sets the target emitting channels in a preset emitting channel group separately from the non-target emitting channels to avoid interference with the echo signals received by the non-target receiving channels and improve detection accuracy.

In an embodiment, a target emitting channel refers to the emitting channel corresponding to the target receiving channel.

In an embodiment, the LiDAR has three emitting channel groups, each with 12 emitting channels. When the LiDAR starts working, it first controls the 12 emitting channels in the first emitting channel group to emit detection signals, then controls the 12 emitting channels in the second emitting channel group to emit detection signals, and controls the 12 emitting channels in the third emitting channel group to emit detection signals. After receiving the echo signals generated by the detection signals emitted by the 12 emitting channels in the first emitting channel group, the LiDAR can determine the target emitting channels in the first emitting channel group (referred to as the first group of target emitting channels). After receiving the echo signals generated by the detection signals emitted by the 12 emitting channels in the second emitting channel group, it can determine the target emitting channels in the second emitting channel group (referred to as the second group of target emitting channels). After receiving the echo signals generated by the detection signals emitted by the 12 emitting channels in the third emitting channel group, it can determine the target emitting channels in the third emitting channel group (referred to as the third group of target emitting channels). After determining the first group of target emitting channels, the LiDAR can separate them from the first emitting channel group and place them in a separate emitting channel group (the first emitting channel group). The non-target emitting channels in the first emitting channel group are placed in another emitting channel group (the second emitting channel group). After determining the second group of target emitting channels, the second group of target emitting channels is separated from the second emitting channel group and placed in a separate emitting channel group (the third emitting channel group). The non-target emitting channels in the second emitting channel group are placed in another emitting channel group (the fourth emitting channel group). After determining the third group of target emitting channels, the third group of target emitting channels is separated from the third emitting channel group and placed in a separate emitting channel group (the fifth emitting channel group). The non-target emitting channels in the third emitting channel group are placed in another emitting channel group (the sixth emitting channel group).

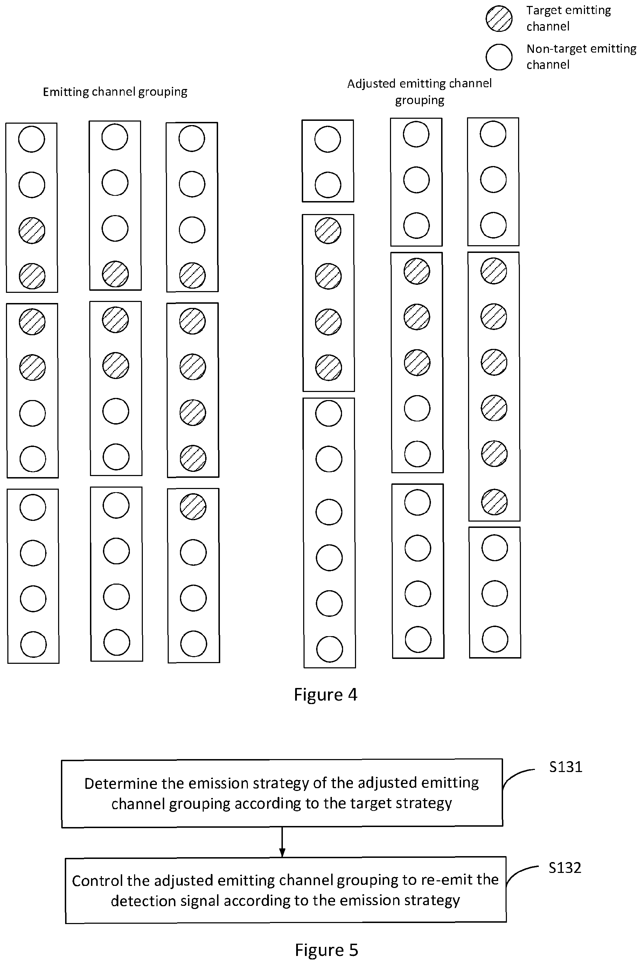

In an embodiment, the non-target emitting channels of the first, second, and third emitting channel groups can also be divided into multiple emitting channel groups, as exemplified in Figure 4.

In an embodiment, the target emitting channels of the first emitting channel group, the target emitting channels of the second emitting channel group, and the target emitting channels of the third emitting channel group can be placed in the same target emitting channel group. The target emitting channels of the first, second, and third emitting channel groups can be placed in at least two emitting channel groups.

When the LiDAR adjusts the emitting channel grouping for multiple emitting channel groups, it can adjust the emitting channel grouping for all emitting channel groups as in the above embodiment, adjust the emitting channel grouping for only some of the emitting channel groups, or adjust the emitting channel grouping for only one emitting channel group.

In an embodiment, the LiDAR select the adjustment of the emitting channel grouping for multiple emitting channel groups based on parameters and working environment of the LiDAR. In an embodiment, adjustments can be made to the grouping of part of the channels in each emitting group. For example, adjustments can be made to the grouping of emitting channels corresponding to the center detection field in each emitting group.

In an embodiment, the emitting channel group corresponding to the detection area with higher resolution requirements is adjusted, while the emitting channel group corresponding to the detection area with lower resolution requirements is not adjusted.

In an embodiment, the LiDAR includes multiple emitting channel groups. Each emitting channel corresponds to a different detection field of view. Some emitting channel groups correspond to the detection area corresponding to the center detection field, while some emitting channel groups correspond to the detection area corresponding to the edge detection field. The resolution requirement of the detection area corresponding to the center detection field is higher than that of the edge detection field. Therefore, S12 can include the following steps: determine the target emitting channel group according to a target detection field; filter out the target emitting channels in the target emitting channel group, the target emitting channel is the emitting channel corresponding to the target receiving channel; set the target emitting channels in one emitting channel group.

In an embodiment, the target detection field can be determined based on the detection requirements or resolution requirements of the LiDAR, and the target emitting channel group is the emitting channel group corresponding to the target detection field. The emitting channel group corresponding to the target detection field is adjusted. The target emitting channels in the target emitting channel group are set in one emitting channel group, while the non-target emitting channels in the target emitting channel group are set in another or several other emitting channel groups. No adjustments are made to other emitting channel groups.

S13: Control the emitting channels to re-emit detection signals according to the adjusted emitting channel grouping.

In an embodiment, the LiDAR can control the adjusted emitting channel grouping to emit detection signals separately. The emitting channel grouping containing the emitting channels corresponding to the target receiving channels (the target emitting channels) and the emitting channel grouping containing the emitting channels corresponding to the non-target receiving channels (the non-target emitting channels) emit detection signals at different times.

Because the emitting channels corresponding to the high-reflective objects and the emitting channels corresponding to the non-high-reflective objects emit laser separately, this effectively reduces the crosstalk of high-energy echoes reflected from high-reflective objects on echoes reflected from non-high-reflective objects, thereby improving the detection accuracy of the LiDAR.

To reduce crosstalk between receiving channels, as shown in Figure 5, in an embodiment, S13 includes the following steps:

S131: Determine the emission strategy of the adjusted emitting channel grouping according to a target strategy; and

S132: Control the adjusted emitting channel grouping to re-emit detection signals according to the emission strategy.

The target strategy can include one or any combination of an emitting power adjustment strategy, an emitting method adjustment strategy, an emitting coding adjustment strategy, and an emitting time adjustment strategy.

The emitting power adjustment strategy is used to adjust the emitting power of each emitting channel in the LiDAR, which can reduce the emitting power of the target emitting channel group to further reduce the echo intensity of the high-reflective object's reflected echo and reduce its interference.

The emitting method adjustment strategy, in an embodiment, adjusts the emitting strategy of the target emitting channel according to the area where the target emitting channel is located. In an embodiment, if the target detection field corresponds to emitting channels 4, 5, 6, and 7, it can control emitting channels 4 and 6 to emit simultaneously, and emitting channels 5 and 7 to emit simultaneously.

The emitting coding adjustment strategy reduces the correlation coefficient of the coding of the target emitting channels.

The emitting time adjustment strategy adjusts the emitting time of each emitting channel in the LiDAR. In an embodiment, it can ensure a time interval between the emitting time of the emitting channel grouping containing the emitting channels corresponding to the target receiving channels and the emitting channel grouping containing the emitting channels corresponding to the non-target receiving channels. The target emitting channels and the non-target emitting channels emit serially, reducing the interference of the high-energy echo reflected from the high-reflective object on the echo signals from other reflective objects.

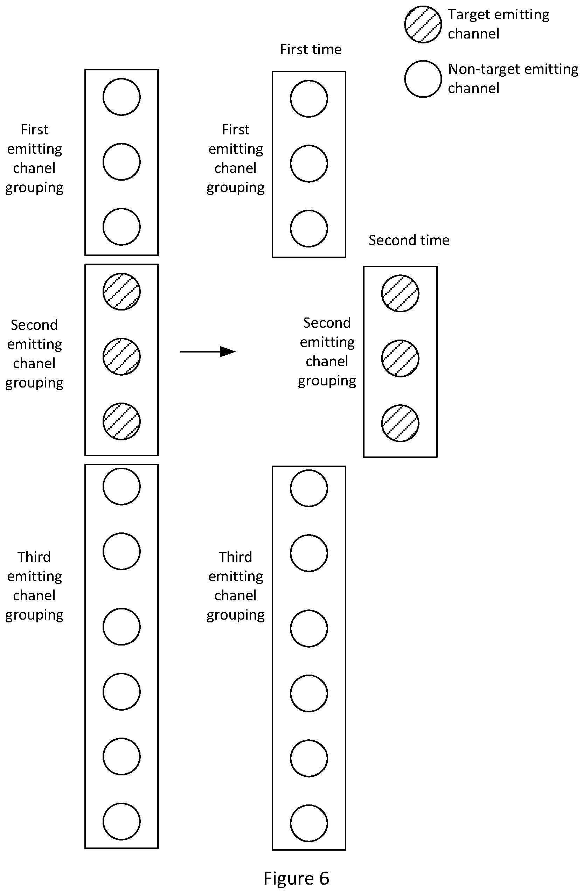

In an embodiment, refer to Figure 6, which shows the emission timing of different emitting channel groupings of a LiDAR. As shown in Figure 6, the LiDAR can control the emitting channel grouping containing the non-target emitting channels (such as the first and third emitting channel groupings in Figure 6) to emit detection signals in parallel at the first moment and control the emitting channel grouping containing the target emitting channels (such as the second emitting channel grouping in Figure 6) to emit detection signals in parallel at the second moment.

Ensuring a time interval between the emitting time of the emitting channel grouping containing the target emitting channels and the emitting time of the emitting channel grouping containing the non-target emitting channels can be achieved by the following method: control the emitting channel groupings to emit detection signals according to the first emitting coding set.

In an embodiment, for different emitting channel groupings, the emission time is staggered by a time interval (achieved by the first emitting coding set).

In an embodiment, the emitting times of different emitting channel groupings (the first emitting coding set) meet the emission jitter requirement. This means that any two emitting coding in the first emitting coding set should have a mutual correlation less than a preset threshold.

The emission jitter requirement ensures a slight time difference between the emission times of different emitting channel groupings to achieve staggered emission (each emission has a different emission time for different emitting channel groupings), and the emitting signals do not interfere with each other.

In an embodiment, the first emitting coding set can be random, meaning the emitting time is random. A pseudo-random sequence can be used as the jitter time coding sequence for different emitting channel groupings, the first emitting coding set is set based on the pseudo-random sequence. If the mutual correlation between pseudo-random sequences is large, the laser emitted by the target emitting channels may interfere with the non-target emitting channels. To reduce interference between channels, the mutual correlation function of each pseudo-random sequence can be obtained, the correlation degree of the emitting time (emitting coding) of each emitting channel grouping can be calculated based on the mutual correlation function, and the jitter delay with a correlation degree less than the preset threshold is selected.

In an embodiment, the mutual correlation function of multiple pseudo-random sequences can be determined by the following formula:

$$\text{CCR}(a, b, \tau) = \sum_{i=0}^{P} a_i b_{i+\tau};$$

where, CCR(a, b, $\tau$) is the mutual correlation function, and $a_i$, $b_{i+\tau}$ represent the pseudo-random coding sequences corresponding to adjacent emitting channels that emit laser beams in parallel.

Select a pair of pseudo-random sequences with a mutual correlation coefficient less than the preset threshold as the jitter delay of two emitting channel groupings. The jitter delay of each emitting channel grouping in the LiDAR can be determined.

In an embodiment, the LiDAR can select different target strategies for different situations. For a LiDAR with adjustable emitting power, the LiDAR can select the emitting power adjustment strategy to adjust the emitting power of the emitting channel grouping containing the target emitting channels, by reducing the emitting power of the emitting channel grouping containing the target emitting channels to reduce the interference of the high-energy reflected echo from the high-reflective object on the echo signals from non-high-reflective objects. Alternatively, for a LiDAR that cannot adjust the emitting power due to hardware constraints, the emitting time adjustment strategy can be selected to adjust the emitting time of different emitting channel groupings. This ensures a time interval between the emitting time of the emitting channel grouping containing the target emitting channels and the emitting time of the emitting channel grouping containing the non-target emitting channels.

In an embodiment, the target strategy can also include a receiving threshold adjustment strategy. The receiving threshold adjustment strategy is used to adjust the signal receiving threshold of each receiving channel in the LiDAR.

In addition to adjusting the emitting power, emitting coding method, and emitting time of the emitting channels, the LiDAR in the embodiments of the present application can also adjust the receiving threshold of the receiving channels.

The receiving threshold adjustment strategy is used to adjust the signal receiving threshold of each receiving channel in the LiDAR. It can increase the signal receiving threshold of the non-target receiving channels to improve the receiving capability of the receiving channels and reduce the interference of crosstalk.

The target strategy can be any one of the emitting power adjustment strategy, receiving threshold adjustment strategy, emitting time adjustment strategy, and emitting coding method adjustment strategy, or a combination of any two or more of the emitting power adjustment strategy, receiving threshold adjustment strategy, emitting time adjustment strategy, and emitting coding method adjustment strategy.

In an embodiment, the target strategy can include the emitting power adjustment strategy, the receiving threshold adjustment strategy, and the emitting time adjustment strategy. When determining the emitting strategy of the adjusted emitting channel grouping according to the target strategy, the emitting power of the emitting channel grouping containing the target emitting channels or the emitting power of the emitting channel grouping containing the non-target emitting channels can be adjusted according to the emitting power adjustment strategy. The emitting time of each emitting channel grouping can be adjusted according to the emitting time adjustment strategy to ensure a time interval between the emitting time of the emitting channel grouping containing the target emitting channels and the emitting time of the emitting channel grouping containing the non-target emitting channels. The receiving threshold of the non-target receiving channels can be adjusted according to the receiving threshold adjustment strategy, or the receiving threshold of the target receiving channels can be adjusted.

During the adjustment process based on the target strategy, adjustments can be made only to the target emitting channels or the target receiving channels, or adjustments can be made to both the target emitting channels, the target receiving channels, the non-target emitting channels, and the non-target receiving channels.

In an embodiment, when adjusting according to the emitting power adjustment strategy, the emitting power of the emitting channel grouping containing the target emitting channels and the emitting power of the emitting channel grouping containing the non-target emitting channels can be adjusted simultaneously, or only the emitting power of the emitting channel grouping containing the target emitting channels can be adjusted, or only the emitting power of the emitting channel grouping containing the non-target emitting channels can be adjusted. In an embodiment, while adjusting the emitting power of the emitting channel grouping according to the emitting power adjustment strategy, the receiving threshold of the receiving channels can be adjusted according to the receiving threshold adjustment strategy.

In an embodiment, while adjusting the emitting power of the emitting channel grouping containing the target emitting channels, the receiving threshold of the target receiving channels can be adjusted; or while adjusting the emitting power of the emitting channel grouping containing the target emitting channels, the receiving threshold of the non-target receiving channels can be adjusted; or while adjusting the emitting power of the emitting channel grouping containing the non-target emitting channels, the receiving threshold of the target receiving channels can be adjusted; or while adjusting the emitting power of the emitting channel grouping containing the non-target emitting channels, the receiving threshold of the non-target receiving channels can be adjusted; or while adjusting the emitting power of the emitting channel grouping containing the target emitting channels, the emitting power of the emitting channel grouping containing the non-target emitting channels can be adjusted, and the receiving threshold of the target receiving channels can be adjusted; or while adjusting the emitting power of the emitting channel grouping containing the target emitting channels, the emitting power of the emitting channel grouping containing the non-target emitting channels can be adjusted, and the receiving threshold of the non-target receiving channels can be adjusted; or while adjusting the emitting power of the emitting channel grouping containing the target emitting channels, the emitting power of the emitting channel grouping containing the non-target emitting channels can be adjusted, and the receiving threshold of the target receiving channels and the receiving threshold of the non-target receiving channels can be adjusted.

While adjusting the emitting power, the emitting time and emitting coding method can be adjusted.

By placing the target emitting channels and the non-target emitting channels in different emitting channel groupings and further adjusting the emitting strategy of different emitting channel groupings, the crosstalk of high-energy echoes reflected from high-reflective objects on the echoes reflected from non-high-reflective objects can be reduced, improving the resolution of the LiDAR.

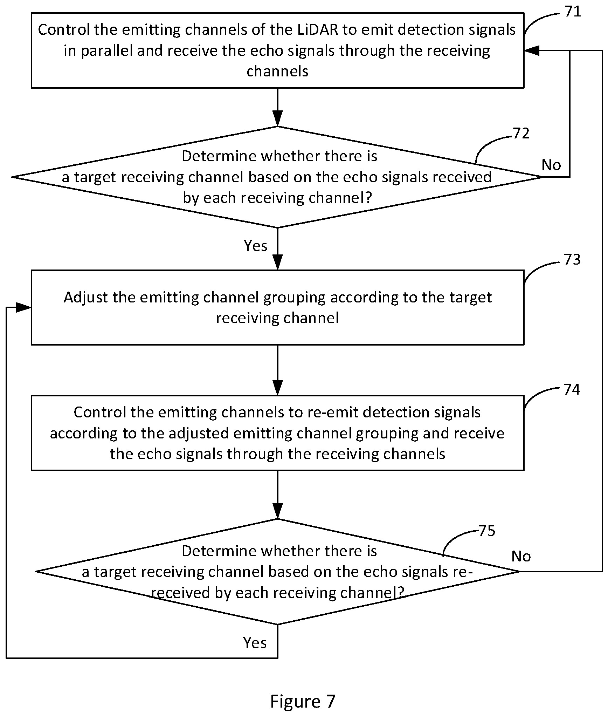

Refer to Figure 7, which shows the implementation flowchart of the LiDAR control method provided by the embodiments of the present application. A LiDAR control method includes the following steps:

S71: Control the emitting channels of the LiDAR to emit detection signals in parallel and receive the echo signals through the receiving channels.

When the LiDAR starts working, it can control the emitting channels in the current emitting channel group to emit detection signals in parallel. After the detection signals reach the target object, they are reflected by the target object to form echo signals. The receiving channels can receive the corresponding echo signals.

The LiDAR can include multiple emitting channel groups. During the working process of the LiDAR, it can control different emitting channel groups to emit detection signals sequentially or in parallel.

In an embodiment, the LiDAR has three emitting channel groups, each with 12 emitting channels. When the LiDAR starts working, it can first control the 12 emitting channels in the first emitting channel group to emit detection signals, then control the 12 emitting channels in the second emitting channel group to emit detection signals, and control the 12 emitting channels in the third emitting channel group to emit detection signals. The LiDAR can also control the first, second, and third emitting channel groups to emit detection signals in parallel.

S72: Determine whether there is a target receiving channel based on the echo signals received by each receiving channel. If there is a target receiving channel based on the echo signals received by each receiving channel, execute S73; otherwise, return to S71.

The implementation of S72 can refer to the description of S11.

S73: Adjust the emitting channel grouping according to the target receiving channel.

The implementation of S73 can refer to the description of S12.

S74: Control the emitting channels to re-emit detection signals according to the adjusted emitting channel grouping and receive the echo signals through the receiving channels.

The implementation of S74 can refer to the description of S13.

S75: Determine whether there is a target receiving channel based on the echo signals re-received by each receiving channel. If there is a target receiving channel based on the echo signals re-received by each receiving channel, return to S73; otherwise, return to S71.

In S75, the echo signals at this time are the echo signals received by the LiDAR after re-emitting the detection signals according to the adjusted emitting channel grouping or after re-emitting the detection signals according to the adjusted emitting channel grouping and the adjusted emitting strategy. It can determine whether there is still a receiving channel corresponding to a high-reflective object (the target receiving channel). If there is a target receiving channel, it can adjust the emitting channel grouping (return to S73). If there is no target receiving channel, the LiDAR can continue the serial or parallel transceiving action (return to S71).

In an embodiment, determine the target receiving channel corresponding to the high-reflective object based on the echo information received by each receiving channel. It adjusts the emitting channel grouping of all emitting channels in the LiDAR, ensuring that an emitting channel corresponding to the target receiving channel and an emitting channel corresponding to the non-target receiving channel are in different emitting channel groupings. The LiDAR is controlled to emit detection signals according to the adjusted emitting channel grouping. Since the emitting channels corresponding to the high-reflective object and the emitting channels corresponding to the non-high-reflective object emit detection laser separately, this effectively reduces the crosstalk of high-energy echoes reflected from high-reflective objects on the echoes reflected from non-high-reflective objects, thereby improving the resolution of the LiDAR.

The order of the steps in the above embodiments does not imply the order of execution, and the execution order of the processes should be determined based on their functions and internal logic.

Based on the LiDAR control method provided by the above embodiments, the embodiments of the present invention provide a LiDAR control device for implementing the method embodiments.

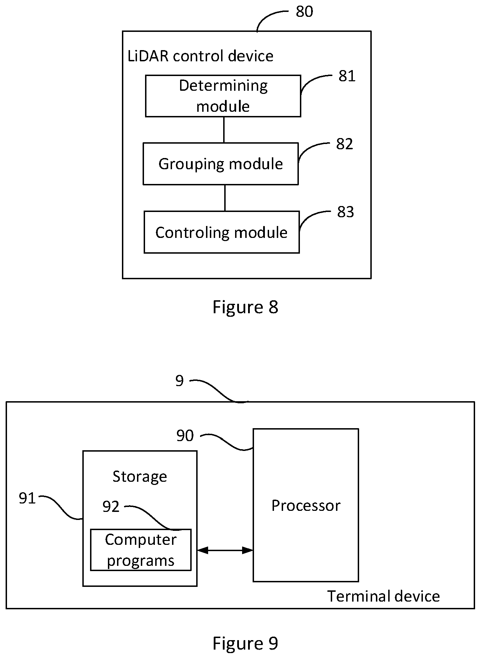

Refer to Figure 8, which shows the structural diagram of a LiDAR control device provided by the embodiments. The LiDAR control device includes units for executing the steps corresponding to the embodiment in Figure 1.

As shown in Figure 8, the LiDAR control device 80 includes: a determining module 81, a grouping module 82, and a controlling module 83.

The determining module 81 is used to determine the target receiving channel based on the echo signals received by each receiving channel; where the target receiving channel is the receiving channel that receives the echo signal reflected by a high-reflective object.

The grouping module 82 is used to adjust the emitting channel grouping based on the target receiving channel; where the emitting channel corresponding to the target receiving channel and the emitting channel corresponding to the non-target receiving channel are in different emitting channel groupings.

The controlling module 83 is used to control the emitting channels to re-emit the detection signals according to the adjusted emitting channel grouping.

In an embodiment, the controlling module 83 includes a strategy adjustment unit and a control unit.

The strategy adjustment unit is used to determine the emission strategy of the adjusted emitting channel grouping according to the target strategy.

The control unit is used to control the adjusted emitting channel grouping to re-emit detection signals according to the emission strategy.

In an embodiment, the target strategy includes at least one of the emitting power adjustment strategy, emitting coding adjustment strategy, and emitting time adjustment strategy.

When the target strategy is the emitting time adjustment strategy, the strategy adjustment unit is used to adjust the emitting time of the emitting channel grouping containing the emitting channels corresponding to the target receiving channels and/or adjust the emitting time of the emitting channel grouping containing the emitting channels corresponding to the non-target receiving channels; where there is a time interval between the adjusted emitting time of the emitting channel grouping containing the emitting channels corresponding to the target receiving channels and the adjusted emitting time of the emitting channel grouping containing the emitting channels corresponding to the non-target receiving channels.

In an embodiment, the determining module 81 is used to determine whether there is a target receiving channel based on the echo signals re-received by each receiving channel.

In an embodiment, the LiDAR includes multiple emitting channel groups. The grouping module 82 is used to filter out the target emitting channels in each emitting channel group, where the target emitting channels are the emitting channels corresponding to the target receiving channels; and set the target emitting channels in one emitting channel group.

In an embodiment, the LiDAR includes multiple emitting channel groups. The grouping module 82 is used to determine the target emitting channel group according to the target detection field; filter out the target emitting channels in the target emitting channel group, where the target emitting channels are the emitting channels corresponding to the target receiving channels; and set the target emitting channels in one emitting channel group.

In an embodiment, the target strategy includes a receiving threshold adjustment strategy. The strategy adjustment unit is further used to adjust the receiving threshold of the receiving channels according to the receiving threshold adjustment strategy.

In an embodiment, the LiDAR control device can determine the target receiving channel corresponding to the high-reflective object based on the echo information received by each receiving channel. It adjusts the emitting channel grouping of all emitting channels in the LiDAR, ensuring that the emitting channel corresponding to the target receiving channel and the emitting channel corresponding to the non-target receiving channel are in different emitting channel groupings. It then controls the LiDAR to emit the detection signal according to the adjusted emitting channel grouping. Since the emitting channels corresponding to the high-reflective object and the emitting channels corresponding to the non-high-reflective object emit the detection laser separately, this effectively reduces the crosstalk of high-energy reflected echoes from high-reflective objects on the reflected echoes from non-high-reflective objects, thereby improving the resolution of the LiDAR.

Refer to Figure 9, which shows the structural diagram of a terminal device. As shown in Figure 9, the terminal device 9 includes: a processor 90, a storage 91, and computer programs 92 stored in the storage 91 and capable of running on the processor 90, such as an image segmentation program. When the processor 90 executes the computer programs 92, it implements the steps of the LiDAR control method in the embodiments of the present application, such as S11 to S13 shown in Figure 1. Alternatively, when the processor 90 executes the computer programs 92, it implements the functions of each module/unit in the embodiments of the terminal device, such as the functions of units 81 to 83 shown in Figure 8.

In an embodiment, the computer programs 92 can be divided into one or more modules or units, stored in the storage 91, and executed by the processor 90. The one or more modules or units can be a series of computer program instruction segments capable of completing specific functions. These instruction segments describe the execution process of the computer programs 92 in the terminal device 9. For example, the computer programs 92 can be divided into multiple units. For the specific functions of each unit, refer to the corresponding description in the embodiment of Figure 7.

The terminal device can include the processor 90 and the storage 91. In an embodiment, the terminal device can also include input or output devices, network access devices, buses, etc.

The processor 90 can be a central processing unit (CPU), or other general-purpose processors, digital signal processors (DSPs), application-specific integrated circuits (ASICs), field-programmable gate arrays (FPGAs), or other programmable logic devices, discrete gates or transistor logic devices, discrete hardware components, etc. The general-purpose processor can be a microprocessor or any conventional processor.

The storage 91 can be an internal storage unit of the terminal device 9, such as a hard disk or memory of the terminal device 9. The storage 91 can also be an external storage device of the terminal device 9, such as a plug-in hard disk, smart media card (SMC), secure digital (SD) card, flash card, etc. Furthermore, the storage 91 can include both the internal storage unit and external storage devices of the terminal device 9. The storage 91 is used to store the computer programs and other programs and data required by the terminal device. The storage 91 can also be used to temporarily store data that has been output or is to be output.

Embodiments of the present application also provide a computer-readable storage medium. The computer-readable storage medium stores computer programs that, when executed by a processor, can implement the LiDAR control method described above.

Embodiments of the present application provide a computer program product that, when run on a terminal device, enables the terminal device to execute the LiDAR control method described above.

For convenience and brevity of description, the division of the functional units and modules in the above description is illustrative. The described functions can be integrated into one processing unit or distributed among different units or modules. The functions of each unit or module can be realized by hardware or software.

Combining the described units and algorithm steps in the embodiments of the present application can be realized by electronic hardware, computer software, or a combination of both. The functions can be executed by hardware or software.

## Claims

1. A LiDAR control method, comprising:

   determining a target receiving channel based on an echo signal received by each receiving channel, wherein the target receiving channel is a receiving channel that receives an echo signal reflected from a high-reflective object;
   adjusting an emitting channel grouping according to the target receiving channel, wherein an emitting channel corresponding to the target receiving channel and an emitting channel corresponding to a non-target receiving channel are in different emitting channel groupings; and
   controlling an emitting channel to re-emit a detection signal according to the adjusted emitting channel grouping.

2. The LiDAR control method according to claim 1, wherein the controlling an emitting channel to re-emit a detection signal according to the adjusted emitting channel grouping comprises:

   determining an emitting strategy for the adjusted emitting channel grouping according to a target strategy; and
   controlling the adjusted emitting channel grouping to re-emit detection signals according to the emitting strategy.

3. The LiDAR control method according to claim 2, wherein the target strategy comprises at least one of an emitting power adjustment strategy, a coding mode adjustment strategy, and an emitting time adjustment strategy.

4. The LiDAR control method according to claim 3, wherein when the target strategy is the emitting time adjustment strategy, the determining an emitting strategy for the adjusted emitting channel grouping according to the target strategy comprises:

adjusting an emitting time of an emitting channel grouping where the emitting channel corresponding to the target receiving channel is located and/or adjusting an emitting time of an emitting channel grouping where the emitting channel corresponding to the non-target receiving channel is located, wherein there is a time interval between the adjusted emitting time of the emitting channel corresponding to the target receiving channel and the adjusted emitting time of the emitting channel corresponding to the non-target receiving channel.

5. The LiDAR control method according to claim 4, wherein the adjusting the emitting time of the emitting channel corresponding to the target receiving channel and/or the adjusting the emitting time of the emitting channel corresponding to the non-target receiving channel comprises:
determining the emitting time of the emitting channel corresponding to the target receiving channel according to a first coding set or determining the emitting time of the emitting channel corresponding to the non-target receiving channel according to the first coding set.

6. The LiDAR control method according to claim 5, after controlling an emitting channel to re-emit a detection signal according to the adjusted emitting channel grouping, the method further comprising:
determining whether a target receiving channel exists based on an echo signal received by each receiving channel.

7. The LiDAR control method according to any one of claims 1 to 6, wherein the LiDAR comprises a plurality of emitting channel groups, and the adjusting the emitting channel grouping according to the target receiving channel comprises:

selecting a target emitting channel in each emitting channel group, wherein the target emitting channel is an emitting channel corresponding to the target receiving channel; and
arranging the target emitting channel in each emitting channel group into one emitting channel grouping.

8. The LiDAR control method according to any one of claims 1 to 6, wherein the LiDAR comprises a plurality of emitting channel groups, and the adjusting the emitting channel grouping according to the target receiving channel comprises:

determining a target emitting channel group according to a target detection field of view;
selecting a target emitting channel in the target emitting channel group, wherein the target emitting channel is an emitting channel corresponding to the target receiving channel; and
arranging the target emitting channel into one emitting channel grouping.

9. The LiDAR control method according to claim 1, wherein a target strategy comprises a receiving threshold adjustment strategy, and the adjusting the emitting channel grouping according to the target receiving channel comprises:
adjusting a receiving threshold of the receiving channel according to the receiving threshold adjustment strategy.

10. A LiDAR control device, comprising:

a determining module, configured to determine a target receiving channel based on an echo signal received by each receiving channel, wherein the target receiving channel is a receiving channel that receives an echo signal reflected from a high-reflective object;
a grouping adjusting module, configured to adjust an emitting channel grouping according to the target receiving channel, wherein an emitting channel corresponding to the target receiving channel and an emitting channel corresponding to a non-target receiving channel are in different emitting channel groupings; and
a controlling module, configured to control an emitting channel to re-emit a detection signal according to the adjusted emitting channel grouping.

11. A computer-readable storage medium having stored thereon computer programs which, when executed by a processor, cause the processor to implement the LiDAR control method according to any one of claims 1 to 9.

Determine a target receiving channel based on the echo signal received by each receiving channel — S11

Adjust the emitting channel grouping according to the target receiving channel — S12

Control the emitting channels to re-emit detection signals according to the adjusted emitting channel grouping — S13

Figure 1

Emitting channel grouping    Adjusted emitting channel grouping

Target emitting channel

Non-target emitting channel

Figure 2

Emitting channel grouping

Adjusted emitting channel grouping

Target emitting channel

Non-target emitting channel

Figure 3

Target emitting channel

Non-target emitting channel

Emitting channel grouping

Adjusted emitting channel grouping

Figure 4

Determine the emission strategy of the adjusted emitting channel grouping according to the target strategy — S131

Control the adjusted emitting channel grouping to re-emit the detection signal according to the emission strategy — S132

Figure 5

Target emitting channel

Non-target emitting channel

First time

First emitting chanel grouping

First emitting chanel grouping

Second time

Second emitting chanel grouping

Second emitting chanel grouping

Third emitting chanel grouping

Third emitting chanel grouping

Figure 6

Control the emitting channels of the LiDAR to emit detection signals in parallel and receive the echo signals through the receiving channels — 71

Determine whether there is a target receiving channel based on the echo signals received by each receiving channel? — 72

No

Yes

Adjust the emitting channel grouping according to the target receiving channel — 73

Control the emitting channels to re-emit detection signals according to the adjusted emitting channel grouping and receive the echo signals through the receiving channels — 74

Determine whether there is a target receiving channel based on the echo signals re-received by each receiving channel? — 75

No

Yes

Figure 7

80

LiDAR control device

Determining module — 81

Grouping module — 82

Controling module — 83

Figure 8

9

Storage 90

Processor

91

92

Computer programs

Terminal device

Figure 9

Europäisches
Patentamt

European
Patent Office

Office européen
des brevets

# EUROPEAN SEARCH REPORT

Application Number

EP 24 18 2036

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/326364 A1 (RICHTER JOHANNES [DE]) 13 October 2022 (2022-10-13) | 1-3,7-11 | INV.<br>G01S7/481 |
| Y | * figures 1-3 *<br>* paragraphs [0030] - [0039] * | 4-6 | G01S7/484<br>G01S7/486<br>G01S17/10 |
| X | US 2021/165094 A1 (DROZ PIERRE-YVES [US] ET AL) 3 June 2021 (2021-06-03) | 1-3,7-11 | G01S17/42<br>G01S17/931 |
| Y | * figures 3, 5, 6A-6C, 7A-7D *<br>* paragraphs [0072], [00820085] - [0089], [0100], [0109] - [0112], [0115] - [0122] * | 4-6 | ADD.<br>G01S7/4911<br>G01S7/4912<br>G01S17/32 |
| X | US 2020/141716 A1 (DROZ PIERRE-YVES [US] ET AL) 7 May 2020 (2020-05-07) | 1-11 | |
| Y | * figures 3B, 9A, 9B, 10, 12A, 12B *<br>* paragraphs [0087], [0171] - [0180], [0190] - [0195] * | 4-6 | |

TECHNICAL FIELDS
SEARCHED (IPC)

G01S

The present search report has been drawn up for all claims

| Place of search | Date of completion of the search | Examiner |
|---|---|---|
| Munich | 15 November 2024 | Rodríguez González |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 2036

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2024

| Patent document cited in search report | Publication date | Patent family member(s) | | Publication date |
|---|---|---|---|---|
| US 2022326364 A1 | 13-10-2022 | CN | 115201788 A | 18-10-2022 |
| | | DE | 102021203464 A1 | 13-10-2022 |
| | | US | 2022326364 A1 | 13-10-2022 |
| US 2021165094 A1 | 03-06-2021 | CN | 114729997 A | 08-07-2022 |
| | | EP | 4042189 A1 | 17-08-2022 |
| | | IL | 293290 A | 01-07-2022 |
| | | JP | 7383815 B2 | 20-11-2023 |
| | | JP | 7558371 B2 | 30-09-2024 |
| | | JP | 2023503565 A | 31-01-2023 |
| | | JP | 2024009033 A | 19-01-2024 |
| | | US | 2021165094 A1 | 03-06-2021 |
| | | US | 2024310520 A1 | 19-09-2024 |
| | | WO | 2021108242 A1 | 03-06-2021 |
| US 2020141716 A1 | 07-05-2020 | CN | 113272676 A | 17-08-2021 |
| | | EP | 3857260 A2 | 04-08-2021 |
| | | IL | 282695 A | 30-06-2021 |
| | | JP | 7242849 B2 | 20-03-2023 |
| | | JP | 2022506031 A | 17-01-2022 |
| | | US | 2020141716 A1 | 07-05-2020 |
| | | WO | 2020131217 A2 | 25-06-2020 |

EPO FORM P0459

For more details about this annex : see Official Journal of the European Patent Office, No. 12/82